# EUROPÄISCHE PATENTSCHRIFT

(11) **EP 2 454 978 B1**
(45) Veröffentlichungstag und Bekanntmachung des Hinweises auf die Patenterteilung: **20.03.2013**
(21) Anmeldenummer: 11450136.4
(22) Anmeldetag: 04.11.2011
(51) Int. Cl.: A47J 42/04, A47J 42/08

(54) **Gewürzmühle**
Spice grinder
Moulin à épices

(30) Priorität: 18.11.2010 AT 19052010
(43) Veröffentlichungstag der Anmeldung: 23.05.2012
(73) Patentinhaber: Joma Kunststofftechnik GmbH & Co. KG, 2345 Brunn am Gebirge (AT)
(72) Erfinder: Petri, Ovidiu, 2362 Biedermannsdorf (AT)
(74) Vertreter: Rippel, Andreas

(56) Entgegenhaltungen:
- EP-A1- 1 989 979
- EP-A1- 2 177 140

## Beschreibung

Die Erfindung bezieht sich auf eine Gewürzmühle mit einem auf einen Behälter, insbesondere eine Flasche, aufsetzbaren Mahlwerk, das einen mit Zähnen versehenen Stator aufweist, in dem ein mit Zähnen versehener Rotor gelagert ist, der über eine fest mit ihm verbundene Kappe drehbar und begrenzt axial verschiebbar ist, wobei der Umfangsteil der Kappe mit nach innen ragenden Ansätzen versehen ist, die eine umfänglich verlaufende Rippe des Behälterhalses übergreifen.

Aus der EP 1 696 775 B1 ist eine Gewürzmühle bekannt, wobei das Mahlwerk auf dem Behälterhals durch Verschraubung befestigt ist. Die Begrenzung der axialen Verschiebung erfolgt durch zwei am Rotor vorgesehene Nuten, die mit einer am Stator vorgesehenen Rippe zusammenwirken.

Nachteilig bei dieser Anordnung ist sowohl die Verschraubung des Mahlwerkes am Behälterhals als auch die Anordnung der beiden nahe beieinander liegenden Nuten am Rotor. Durch die Verschraubung kann sich das Mahlwerk relativ leicht vom Behälter lösen, und die Anordnung von zwei Nuten nahe beieinander ist insbesondere bei Kunststoffteilen verhältnismäßig schwierig und aufwendig.

In der EP 1 989 979 A1 ist eine Gewürzmühle der eingangs genannten Art beschrieben. Beim Verschieben des Rotors muss dabei die umfänglich verlaufende Rippe des Behälterhalses durch elastische Verformung des Umfangsteiles der Kappe überwunden werden. Dabei ist der Stator in Axialrichtung nicht gesichert. Bei einer solchen Anordnung kann eine sichere Arbeitsweise nicht erreicht werden.

Die Erfindung hat es sich zum Ziel gesetzt, die Nachteile der bekannten Gewürzmühlen zu vermeiden und erreicht dies dadurch, dass die umfänglich verlaufende Rippe die obere Begrenzung einer umfänglich verlaufenden Rille bildet, deren Breite der Länge des axialen Verschiebeweges des Rotors entspricht.

Dadurch wird der axiale Verschiebeweg nach beiden Seiten hin einfach und sicher begrenzt.

Im Rahmen der Erfindung ist es zweckmäßig, wenn ein mit der Kappe verbundener Innenteil einen den Rotor mindestens teilweise umgebenden Rand aufweist, der innen eine umfänglich verlaufende Nut besitzt, die bei einer axialen Verschiebung der Kappe und damit des Rotors mit einer an diesem angeordneten Rippe zusammenwirkt.

Nachstehend ist die Erfindung anhand eines in den Zeichnungen dargestellten Ausführungsbeispieles näher beschrieben.

Dabei zeigt:
Fig. 1 den Behälterhals mit aufgesetztem Mahlwerk im Schnitt in der Stellung zum Feinmahlen;
Fig. 2 in einer der Fig. 1 entsprechenden Darstellung das Mahlwerk in der Stellung zum Grobmahlen;
Fig. 3 den Behälterhals in Seitenansicht.

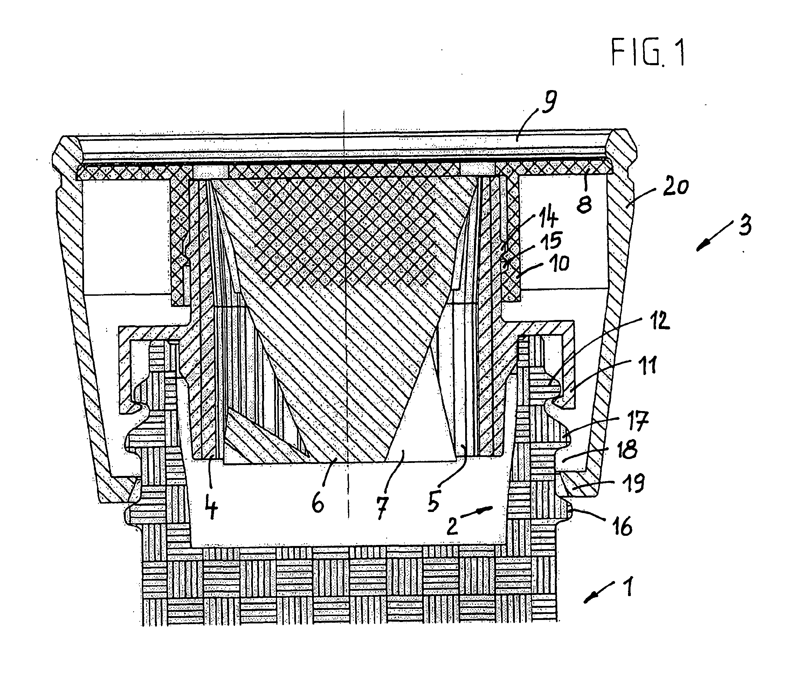

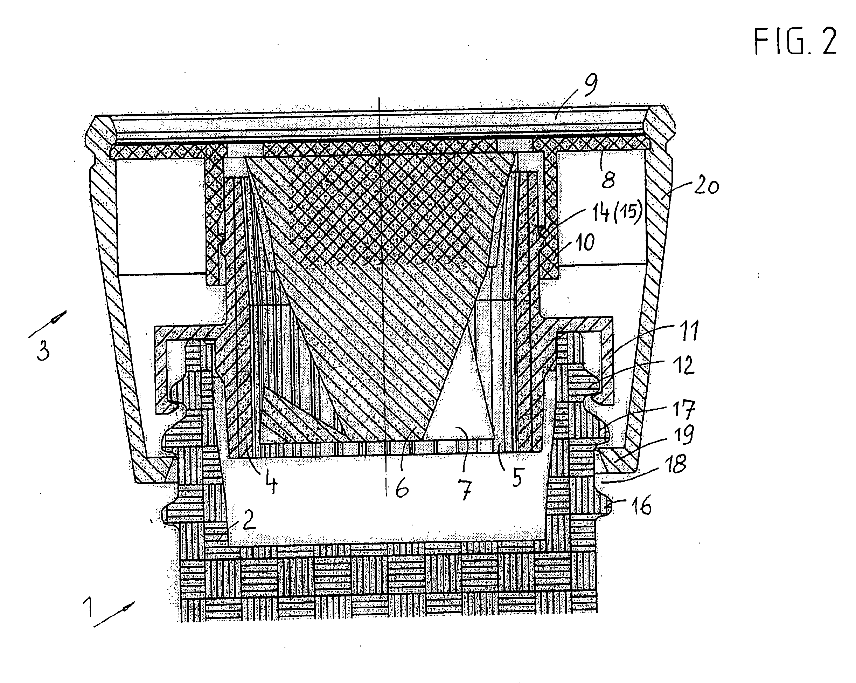

Gemäß den Fig. 1 und 2 ist auf dem Behälterhals 2 eines Behälters 1, insbesondere einer Flasche, ein Mahlwerk 3 aufgesetzt. Das Mahlwerk 3 besteht aus einem Stator 4 mit nach innen ragenden Zähnen 5 und einem im Stator 4 gelagerten Rotor 6 mit Zähnen 7, die mit den Zähnen 5 des Stators 4 zum Mahlen eines im Behälter 1 enthaltenen Gewürzes zusammenwirken.

Der Rotor 6 ist mit einem Innenteil 8 und dieser mit einer Kappe 9 fest verbunden. Der mit der Kappe 9 verbundene Innenteil 8 weist einen den Rotor 6 mindestens teilweise umgebenden Ring 10 auf.

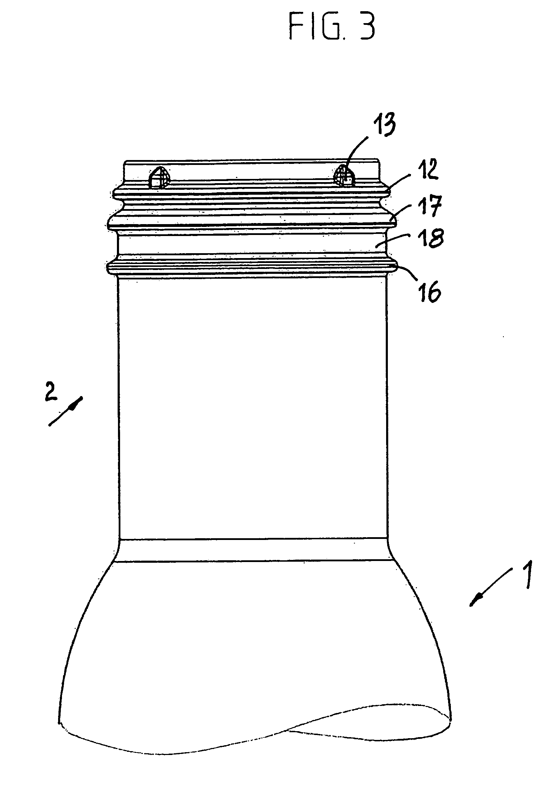

Der Stator 4 besitzt nach innen federnde Krallen 11, die eine am Behälterhals 2 nahe seinem oberen Ende umfänglich verlaufende Rippe 12 umgreifen, wodurch der Stator 4 fest am Behälterhals 2 befestigt ist. Zur Verdrehsicherung des Stators 4 sind am Behälterhals 2, wie aus Fig. 3 ersichtlich ist, Vorsprünge 13 angeordnet.

Der Rotor 6 weist eine an seinem Umfang angeordnete Rippe 14 auf, die mit einer innen am Ring 10 umfänglich verlaufenden Nut 15 zusammenwirkt.

Der Behälterhals 2 besitzt an seinem Außenumfang zwei umfänglich verlaufende Rippen 16 und 17, die eine Rille 18 begrenzen. In diese Rille 18 greifen Ansätze 19 ein, welche am Umfangsteil 20 der Kappe 9 angeordnet sind.

Diese Ansätze 19 begrenzen daher, insbesondere durch die Rippe 17, eine axiale Bewegung der Kappe 9 und damit des Rotors 6.

Demgemäß ist bei der in Fig. 1 dargestellten Lage des Rotors 6 ein größerer Mahlspalt zwischen dem Stator 4 und dem Rotor 6 vorhanden. Im Gegensatz dazu ist bei der in Fig. 2 dargestellten Stellung, in der die Rippe 14 in die Nut 15 eingreift, der Mahlspalt zwischen dem Stator 4 und dem Rotor 6 kleiner.

Wie ersichtlich, ist zur Befestigung des Mahlwerkes 3 am Behälter keine Verschraubung erforderlich. Die Begrenzung der axialen Verschiebebewegung erfolgt durch die beiden Rippen 16 und 17, wobei insbesondere die Rippe 17 wesentlich ist, weil sie ein Ausziehen des Rotors aus dem Stator verhindert.

Im Rahmen der Erfindung sind zahlreiche Abänderungen möglich. So könnte z.B. der Innenteil 8 mit seinem Ring 10 einstückig mit der Kappe 20 ausgebildet sein.

## Patentansprüche

1. Gewürzmühle mit einem auf einen Behälter (1), insbesondere eine Flasche, aufsetzbaren Mahlwerk (3), das einen mit Zähnen (5) versehenen Stator (4) aufweist, in dem ein mit Zähnen (7) versehener Rotor (6) gelagert ist, der über eine fest mit ihm verbundene Kappe (9) drehbar und begrenzt axial verschiebbar ist, wobei der Umfangsteil (20) der Kappe (9) mit nach innen ragenden Ansätzen (19) versehen ist, die eine umfänglich verlaufende Rippe (17) des Behälterhalses (2) übergreifen, **dadurch gekennzeichnet, dass** die umfänglich verlaufende Rippe (17) die obere Begrenzung einer umfänglich verlaufenden Rille (18) bildet, deren Breite der Länge des axialen Verschiebeweges des Rotors (6) entspricht.

2. Gewürcmühle nach Anspruch 1, **dadurch gekennzeichnet, dass** ein mit der Kappe (9) verbundener Innenteil (8) einen den Rotor (6) mindestens teilweise umgebenden Ring (10) aufweist, der innen eine umfänglich verlaufende Nut (15) besitzt, die bei einer axialen Verschiebung der Kappe (9) und damit des Rotors (6) mit einer an diesem angeordneten Rippe (14) zusammenwirkt.

## Claims

1. A spice mill comprising a mill work (3), which can be attached to a container (1), in particular a bottle and which encompasses a stator (4), which is provided with teeth (5) and in which a rotor (6), which is provided with teeth (7) and which can be displaced axially so as to be rotatable and defined via a cap (9), which is fixedly connected to it, is supported, wherein the peripheral part (20) of the cap (9) is provided with appendages (19), which protrude inwardly and which overlap a rib (17) of the container neck (2), which runs peripherally, **characterized in that** the rib (17), which runs peripherally, forms the upper limitation of a groove (18), which runs peripherally and the width of which corresponds to the length of the axial displacement path of the rotor (6).

2. The spice mill according to claim 1, **characterized in that** an inner part (8), which is connected to the cap (9), encompasses a ring (10), which at least partially surrounds the rotor (6) and which has a groove (15), which runs peripherally on the inside, which, in response to an axial displacement of the cap (9) and thus of the rotor (6), interacts with a rib (14), which is connected to said rotor.

## Revendications

1. Moulin à épices avec un broyeur (3) susceptible d'être placé sur un récipient (1), notamment sur une bouteille, qui comporte un stator (4) muni de dents (5), dans lequel est logé un rotor (6) muni de dents (7), qui par l'intermédiaire d'une calotte (9) fixement reliée avec lui est déplaçable en rotation et de manière limitée en direction axiale, la partie périphérique (20) de la calotte (9) étant munie de tétons (19) saillant vers l'intérieur qui recouvrent une nervure (17) s'étendant en périphérie de la gorge du récipient (2), **caractérisé en ce que** la nervure (17) s'étendant en périphérie forme la délimitation supérieure d'une cannelure (18) s'étendant en périphérie dont la largeur correspond à la longueur du trajet de déplacement axial du rotor (6).

2. Moulin à épices selon la revendication 1, **caractérisé en ce qu'**une partie intérieure (8) reliée à la calotte (9) comporte une bague (10) entourant au moins en partie le rotor (6), qui présente à l'intérieur une rainure (15) s'étendant en périphérie, qui lors d'un déplacement axial de la calotte (9) et donc du rotor (6) coopère avec une nervure (14) disposée sur ce dernier.
